(19) Europäisches Patentamt / European Patent Office / Office européen des brevets

(11) **EP 3 517 294 B1**

(12) **FASCICULE DE BREVET EUROPEEN**

(45) Date de publication et mention de la délivrance du brevet:
**08.12.2021 Bulletin 2021/49**

(21) Numéro de dépôt: **19158603.1**

(22) Date de dépôt: **12.01.2017**

(51) Int Cl.:
**B32B 27/08** *(2006.01)*  **B32B 27/22** *(2006.01)*
**B32B 27/30** *(2006.01)*  **B32B 27/32** *(2006.01)*
**B32B 27/34** *(2006.01)*  **B32B 1/08** *(2006.01)*
**F16L 11/04** *(2006.01)*  **B32B 7/02** *(2019.01)*
**B32B 27/18** *(2006.01)*

(54) **STRUCTURE TUBULAIRE MULTICOUCHE POSSÉDANT UNE MEILLEURE RÉSISTANCE À L'EXTRACTION DANS LA BIO-ESSENCE ET SON UTILISATION**

MEHRSCHICHTIGE ROHRSTRUKTUR MIT VERBESSERTER RESISTENZ GEGEN EXTRAKTION IN BIOBENZIN, UND IHRE ANWENDUNG

MULTILAYER TUBULAR STRUCTURE HAVING IMPROVED RESISTANCE TO EXTRACTION IN THE BIO-ESSENCE AND USE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.01.2016 FR 1650337**

(43) Date de publication de la demande:
**31.07.2019 Bulletin 2019/31**

(62) Numéro(s) de document de la (des) demande(s) initiale(s) en application de l'article 76 CBE:
**17712187.8 / 3 283 293**

(73) Titulaire: **Arkema France**
**92700 Colombes (FR)**

(72) Inventeurs:
- **MONTANARI, Thibaut**
  **27470 SERQUIGNY (FR)**
- **RECOQUILLE, Christelle**
  **27470 SERQUIGNY (FR)**
- **VERBAUWHEDE, Bertrand**
  **27470 SERQUIGNY (FR)**
- **DUFAURE, Nicolas**
  **27470 SERQUIGNY (FR)**
- **DECHAMPS, Florent**
  **27470 SERQUIGNY (FR)**

(56) Documents cités:
EP-A1- 1 393 889     EP-A2- 1 496 298
EP-B1- 2 094 481     EP-B1- 2 098 580
DE-A1-102008 044 224     FR-A1- 2 925 865
US-A- 5 554 426     US-A1- 2013 126 031

**Description**

L'invention porte sur une structure multicouche, en particulier sous forme de tube, et son utilisation pour transporter des fluides, en particulier du carburant de type essence, notamment alcoolisée, en particulier pour les véhicules à moteur.

L'invention porte plus particulièrement sur les tubes présents au sein d'un moteur. Ces tubes peuvent par exemple être destinés au transport de carburants, notamment entre le réservoir et le moteur, au circuit de refroidissement, au système hydraulique, ou encore destinés au circuit d'air conditionné ou le transport de mélange d'urée et d'eau.

Pour le transport de l'essence et en particulier de bio-essence, il faut satisfaire de nombreux critères, en particulier de bonnes propriétés en barrière (pour des raisons de protection de l'environnement), de choc à froid, de tenue pression, etc.

Pour des raisons de sécurité et de préservation de l'environnement, notamment avec l'arrivée de nouveaux bio-carburants, les constructeurs automobiles imposent aux tubes précédemment cités des caractéristiques mécaniques particulières, ainsi que des caractéristiques de très faible perméabilité et de bonne tenue aux différents constituants des carburants, ceux-ci variant selon le pays (hydrocarbures, additifs, alcools comme le méthanol et l'éthanol, les alcools pouvant être des composants majoritaires dans certains cas), aux huiles de lubrification du moteur et aux autres produits chimiques susceptibles d'être rencontrés dans cet environnement (acide de batteries, liquides de frein, liquides de refroidissement, sels métalliques tels que le chlorure de calcium ou de zinc).

Les caractéristiques des cahiers des charges couramment requises par les constructeurs automobiles pour qu'un tube soit jugé satisfaisant sont cumulativement les suivantes :

- bonne et pérenne adhésion entre les couches, si le tube est un tube multicouche, tout particulièrement après avoir été exposé au carburant ;
- bonne intégrité des liaisons (tubes avec raccords) après circulation du carburant, c'est-à-dire ne conduisant à aucune fuite ;
- bonne stabilité dimensionnelle du tube, lorsqu'il est utilisé avec de l'essence ;
- bonne tenue aux chocs à froid (de -30°C à -40°C environ), de manière à ce que le tube ne se brise pas ;
- bonne tenue à chaud (environ 150°C), de manière à ce que le tube ne se déforme pas ;
- bonne tenue au vieillissement en milieu oxydatif chaud (par exemple : air chaud du compartiment moteur, de 100 à 150°C environ) ;
- bonne tenue aux carburants et à leurs produits de dégradation et notamment avec de fortes teneurs en peroxyde ;
- très faible perméabilité aux carburants, et plus particulièrement de bonnes propriétés barrière aux bio-carburants, tant pour ses composants polaires (comme l'éthanol) que pour ses composants apolaires (hydrocarbures) ;
- bonne souplesse du tube pour faciliter le montage notamment de la tubulure d'alimentation en carburant ;
- bonne résistance au ZnCl2 (par exemple, en hiver, lorsque les routes sont salées, l'extérieur du tube étant exposé à cet environnement).

De plus, les tubes recherchés doivent éviter les inconvénients suivants :

- si le tube est un tube multicouche, le délaminage des couches, notamment internes, notamment lors de l'insertion de raccord (ce qui peut conduire à des fuites) ;
- un gonflement excessif du tube après vieillissement dans les systèmes essence/diesel (y compris pour les biodiesels ou bio essences), qui peut conduire à des fuites ou des problèmes de positionnement sous le véhicule.

Récemment un nouveau problème est apparu, à savoir l'excès de matière extractible du tube multicouche après contact prolongé avec l'essence alcoolisée. Ces matières extractibles sont susceptibles de bloquer ou boucher les injecteurs des moteurs de véhicules. Les constructeurs automobiles, en particulier Volkswagen ont donc mis en place de nouveaux critères de sélection des tubes susceptibles de transporter de l'essence, notamment alcoolisée, dans les véhicules automobiles qui sont plus sévères qu'auparavant. Ainsi, le nouveau test mis au point par les différents constructeurs notamment Volkswagen consiste à déterminer la proportion d'extractibles d'un tube de transport d'essence après mise en contact de l'intérieur de ce dernier avec de l'essence alcoolisée à chaud pendant plusieurs heures et pesée du résidu d'évaporation de l'essence contenue à l'intérieur du tube correspondant aux extractibles. Le tube testé ne pourra alors être utilisé pour le transport de l'essence que si la proportion d'extractibles est le plus bas possible, en particulier inférieure ou égale à 6g/m2 (de surface interne de tube).

A l'heure actuelle, il existe deux types de tubes, des tubes monocouches et multicouches, c'est-à-dire constitués d'une ou plusieurs couches de polymère. Pour le transport d'essence en particulier, l'utilisation de tube multicouche comprenant une couche barrière tend à se généraliser pour des raisons écologiques.

De manière classique, les tubes utilisés sont fabriqués par mono-extrusion, s'il s'agit d'un tube monocouche, ou par co-extrusion des différentes couches, s'il s'agit d'un tube multicouche, selon les techniques habituelles de transformation des thermoplastiques.

Les structures (MLT) pour le transport d'essence sont typiquement constituées d'une couche barrière tel l'EVOH, entourée de part et d'autre d'une couche PA (au moins une couche) et éventuellement comprenant des couches de liants dans le cas où l'adhésion, entre les autres couches, se révèle insuffisante.

Ainsi le brevet EP 2098580 décrit notamment des tubes présentant une barrière en EVOH et au moins deux couches de polyamides, plastifiées ou non, l'une étant située au-dessus de la couche barrière et l'autre étant située en dessous de la couche barrière.

Néanmoins, ce type de structure ainsi que les autres MLT connues de l'homme de l'art n'est plus adapté au nouveau test d'extractibles préalablement cité.

La présente invention entend résoudre ce nouveau problème par un agencement et une constitution particulière des couches de la structure multicouche.

La présente invention concerne une structure tubulaire multicouche (MLT) destinée au transport de fluides, en particulier d'essence, notamment alcoolisée, comprenant de l'extérieur vers l'intérieur au moins une couche barrière (1) et au moins une couche intérieure (2) situé au-dessous de la couche barrière, la couche barrière (1) étant une couche en EVOH ou en PPA,

ladite couche intérieure (2) ou l'ensemble des couches (2) et des autres couches éventuelles situées au-dessous de la couche barrière, contenant en moyenne de 0 à 1,5% en poids de plastifiant par rapport respectivement au poids total de la composition de la couche (2) ou au poids total de l'ensemble des compositions des couches (2) et des autres couches éventuelles situées au-dessous de la couche barrière,

ladite couche intérieure (2) comprenant majoritairement au moins un polyamide de type aliphatique ou constitué de plus de 75% de motifs aliphatiques, ledit polyamide aliphatique étant choisi parmi :

- un polyamide noté A présentant un nombre moyen d'atomes de carbone par atome d'azote noté $C_A$ compris de 4 à 8,5, avantageusement de 4 à 7 ;
- un polyamide noté B et un nombre moyen d'atomes de carbone par atome d'azote noté $C_B$ compris de 7 à 10, avantageusement de 7,5 à 9,5 ;
- un polyamide noté C présentant un nombre moyen d'atomes de carbone par atome d'azote noté $C_C$ compris de 9 à 18, avantageusement de 10 à 18 ; sous réserve que lorsque ladite couche intérieure (2) comprend au moins trois

polyamides, l'un au moins desdits polyamides A, B ou C est exclu; au moins une couche plus extérieure (3) située au-dessus de la couche barrière est présente, la dite couche extérieure (3) comprenant majoritairement au moins un polyamide de type aliphatique ou constitué de plus de 75% de motifs aliphatiques, en particulier ledit polyamide aliphatique présentant un nombre moyen d'atomes de carbone par atome d'azote compris de 9,5 à 18, avantageusement de 11 à 18; au moins une deuxième couche extérieure (3') située au-dessus de la couche barrière est présente, ladite couche (3') étant située au-dessus de la couche (3), ladite couche (3') étant plastifiée, ledit plastifiant étant présent en une proportion de 1,5% à 15% en poids par rapport au poids total de la composition de ladite couche, l'épaisseur de ladite couche (3') représente de préférence jusqu'à 20% de l'épaisseur totale de la structure tubulaire, en particulier jusqu'à 200μm; au moins une couche (4) est présente, ladite couche (4) ne contenant pas plus de 15% en poids de plastifiant, de préférence pas plus de 1,5% en poids de plastifiant, par rapport au poids total des constituants de la couche (4), avantageusement la couche (4) est dépourvue de plastifiant, ladite couche (4) comprenant majoritairement au moins un polyamide de type aliphatique ou constitué de plus de 75% de motifs aliphatiques, ledit polyamide aliphatique étant choisi parmi : - un polyamide noté A présentant un nombre moyen d'atomes de carbone par atome d'azote noté $C_A$ compris de 4 à 8,5, avantageusement de 4 à 7; - un polyamide noté B et un nombre moyen d'atomes de carbone par atome d'azote noté $C_B$ compris de 7 à 10, avantageusement de 7,5 à 9,5; - un polyamide noté C présentant un nombre moyen d'atomes de carbone par atome d'azote noté Cc compris de 9 à 18, avantageusement de 10 à 18; sous réserve que lorsque ladite couche (4) comprend au moins trois polyamides, l'un au moins desdits polyamides A, B ou C est exclu, ladite couche (4) étant située entre la couche barrière (1) et la couche intérieure (2) et/ou entre la couche extérieure (3) et la couche barrière (1);ou que ladite couche (4) est une couche de liant dont l'épaisseur représente jusqu'à 15% de la structure (MLT).

On ne sortirait pas du cadre de l'invention si l'objet destiné au transport de fluide servait également pour le stockage de fluides.

Le terme « fluide » désigne un gaz utilisé dans l'automobile ou un liquide, en particulier un liquide et notamment une huile, un liquide de frein, une solution d'urée, un liquide de refroidissement à base de glycol, des carburants, notamment les carburants légers susceptibles de polluer, avantageusement les carburants sauf le diesel, notamment de l'essence ou du GPL, en particulier de l'essence et plus particulièrement de l'essence alcoolisée.

L'air, l'azote et l'oxygène sont exclus de la définition dudit gaz.

Avantageusement, ledit fluide désigne des carburants, en particulier de l'essence, notamment de l'essence alcoolisée.

Le terme « essence » désigne un mélange d'hydrocarbures issus de la distillation du pétrole auxquels peuvent être ajoutés des additifs ou des alcools comme le méthanol et l'éthanol, les alcools pouvant être des composants majoritaires dans certains cas.

L'expression « essence alcoolisée » désigne une essence dans laquelle du méthanol ou de l'éthanol ont été ajoutés. Elle désigne également une essence de type E95 qui ne contient pas de produit de distillation du pétrole.

L'expression « l'ensemble des couches (2) et des autres couches éventuelles situées au-dessous de la couche barrière » signifie toutes les couches présentes situées au-dessous de la couche barrière.

L'expression « couche barrière » désigne une couche ayant des caractéristiques de faible perméabilité et de bonne tenue aux différents constituants des fluides, notamment des carburants c'est-à-dire que la couche barrière ralentit le passage du fluide, notamment du carburant, tant pour ses composants polaires (comme l'éthanol) que pour ses composants apolaires (hydrocarbures) dans les autres couches de la structure ou même à l'extérieure de la structure. La couche barrière est donc une couche permettant avant tout de ne pas trop perdre d'essence dans l'atmosphère par diffusion, permettant ainsi d'éviter la pollution atmosphérique.

Ces matériaux barrières sont choisis parmi les polyphtalamides et/ou les copolymères d'éthylène et d'alcool vinylique (noté EVOH ci-après).

Parmi ces matériaux barrière, les EVOH sont particulièrement intéressants, notamment les plus riches en comonomère alcool vivnylique ainsi que ceux modifiés chocs car ils permettent de réaliser des structures moins fragiles.

Les inventeurs ont donc trouvé que l'absence ou du moins une très faible proportion de plastifiant dans la ou les couches intérieures, c'est-à-dire situé(s) sous la couche barrière permettait de diminuer fortement la proportion d'extractibles tel que déterminée par un test tel que défini ci-dessus et en particulier par un test qui consiste à remplir une structure tubulaire d'essence alcoolisée type FAM-B et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 6g/m2 de surface interne de tube.

L'essence alcoolisée FAM B est décrite dans la norme DIN 51604-1 :1982, DIN 51604-2 :1984 et DIN 51604-3 :1984.

Succinctement, de l'essence alcoolisée FAM A est tout d'abord préparée avec un mélange de 50% de Toluène, 30% d'isooctane, 15% de di-isobutylène et 5% d'éthanol puis FAM B est préparé par mélange de 84.5% FAM A avec 15% de méthanol et 0,5% eau.

Au total, FAB est constitué de 42,3% de toluène, 25,4% d'isooctane, 12,7% de di-isobutylène, 4,2% d'éthanol, 15% de méthanol et 0,5% d'eau.

Lorsqu'une seule couche (2) est présente, cette dernière est en contact avec le fluide.

L'expression « ladite couche intérieure (2) comprenant majoritairement au moins un polyamide de type aliphatique» signifie que ledit polyamide de type aliphatique est présent en proportion de plus de 50% en poids dans la couche (2). Le polyamide de type aliphatique est linéaire et n'est pas de type cycloaliphatique.

Avantageusement, ledit polyamide de type aliphatique majoritaire de la ou les couches (2) comprend également majoritairement des motifs aliphatiques, à savoir plus de 50% de motifs aliphatiques.

Avantageusement, ledit polyamide de type aliphatique majoritaire de la ou les couches (2) est constitué de plus de 75% de motifs aliphatiques, de préférence ledit polyamide de type aliphatique majoritaire de la ou les couches (2) est totalement aliphatique.

Parmi ces matériaux barrière, les PPA sont également intéressants, notamment les coPA6T, le PA9T et ses copolymères, le PA10T et ses copolymères.

Selon la présente demande, le terme "polyamide", également noté PA, vise :

- les homopolymères,
- les copolymères, ou copolyamides, à base de différents motifs amide, tel par exemple le copolyamide 6/12 avec des motifs amide dérivés du lactame-6 et du lactame-12,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide, par exemple des motifs éthers. Les exemples les plus connus sont les PEBA ou polyéther-bloc-amide, et leurs variantes copolyamideester-éther, copolyamide-éther, copolyamide ester. Parmi ceux-ci, citons le PEBA-12 où les motifs polyamide sont les mêmes que ceux du PA12, le PEBA-6.12 où les motifs polyamide sont les mêmes que ceux du PA6.12.

On distingue également les homopolyamides, copolyamides et alliages par leur nombre d'atomes de carbone par atome d'azote, sachant qu'il y a autant d'atomes d'azote que de groupes amides (-CO-NH-).

Un polyamide fortement carboné est un polyamide à fort taux d'atomes de carbone (C) par rapport à l'atome d'azote (N). Ce sont les polyamides avec environ au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Un polyamide faiblement carboné est un polyamide à faible taux d'atomes de carbone (C) par rapport à l'atome d'azote (N). Ce sont les polyamides avec environ moins de 9 atomes de carbone par atome d'azote, tel par exemple le polyamide-6, le polyamide-6.6, le polyamide-4.6, le copolyamide-6.T/6.6, le copolyamide 6.I/6.6, le copolyamide 6.T/6.I/6.6, le polyamide 9.T. I représente le diacide isophtalique.

Dans le cas d'un homopolyamide de type PA-X.Y, avec X désignant un motif obtenu à partir d'une diamine et Y désignant un motif obtenu à partir d'un diacide, le nombre d'atomes de carbone par atome d'azote est la moyenne des nombres d'atomes de carbone présents dans le motif issu de la diamine X et dans le motif issu du diacide Y. Ainsi le PA6.12 est un PA à 9 atomes de carbone par atome d'azote, autrement dit un PA en C9. Le PA6.13 est en C9.5.

Dans le cas des copolyamides, le nombre d'atomes de carbone par atome d'azote se calcule selon le même principe. Le calcul est réalisé au prorata molaire des différents motifs amides. Dans le cas d'un copolyamide ayant des motifs de type non amide, le calcul s'effectue uniquement sur la part de motifs amides. Ainsi, par exemple, le PEBA-12, qui est un copolymère bloc de motifs amide 12 et de motifs éther, le nombre moyen d'atome de carbone par atome d'azote sera 12, comme pour le PA12 ; pour le PEBA-6.12, il sera de 9, comme pour le PA6.12.

Ainsi, des polyamides fortement carbonés comme le polyamide PA12 ou 11 adhèrent difficilement sur un polymère EVOH, sur un polyamide faiblement carboné comme le polyamide PA6, ou encore sur un alliage de polyamide PA6 et de polyoléfine (comme, par exemple, un Orgalloy® commercialisé par la société Arkema).

Toutefois, on observe que les structures de tubes actuellement proposées ne sont pas satisfaisantes pour une utilisation dédiée aux bio-carburants, les exigences des cahiers des charges des constructeurs automobiles rappelées ci-avant ne pouvant être toutes simultanément remplies.

Les bio-carburants ne sont pas uniquement issus du pétrole mais comprennent une proportion de produits polaires tels les alcools d'origine végétale, comme l'éthanol ou le méthanol, d'au moins 3%. Ce taux peut monter jusqu'à 85%, voire 95%.

En outre, la température de circulation du carburant tend à s'élever du fait des nouveaux moteurs (plus confinés, opérant à plus haute température).

Ladite couche intérieure (2) ou chacune des couches (2) et des autres couches éventuelles situées au-dessous de la couche barrière, contient de 0 à 1,5% en poids de plastifiant par rapport respectivement au poids total de la composition de la couche (2) ou au poids total de chacune des compositions des couches (2) et des autres couches éventuelles situées au-dessous de la couche barrière.

Dans un mode de réalisation avantageux, dans la structure tubulaire multicouche (MLT) telle que définie ci-dessus, ladite couche intérieure (2) ou chacune des couches (2) et des autres couches éventuelles situées au-dessous de la couche barrière est(sont) dépourvue(s) de plastifiant.

Dans ce mode de réalisation toutes les couches situées sous la couche barrière sont totalement dépourvue de plastifiant et constitué l'une des structures préférées de l'invention.

La présente invention concerne une structure tubulaire multicouche (MLT) telle que définie ci-dessus, dans laquelle au moins une couche plus extérieure (3) située au-dessus de la couche barrière est présente, la dite couche extérieure (3) comprenant majoritairement au moins un polyamide de type aliphatique ou constitué de plus de 75% de motifs aliphatiques, en particulier ledit polyamide aliphatique présentant un nombre moyen d'atomes de carbone par atome d'azote compris 9,5 à 18, avantageusement de 11 à 18.

L'expression « ladite couche extérieure (3) comprenant majoritairement au moins un polyamide de type aliphatique» signifie que ledit polyamide de type aliphatique est présent en proportion de plus de 50% en poids dans la couche (3). Le polyamide de type aliphatique est linéaire et n'est pas de type cycloaliphatique.

Avantageusement, ledit polyamide de type aliphatique majoritaire de la ou les couches (3) comprend également majoritairement des motifs aliphatiques, à savoir plus de 50% de motifs aliphatiques.

Avantageusement, ledit polyamide de type aliphatique majoritaire de la ou les couches (3) est constitué de plus de 75% de motifs aliphatiques, de préférence ledit polyamide de type aliphatique majoritaire de la ou les couches (3) est totalement aliphatique.

Avantageusement, ledit polyamide de type aliphatique majoritaire de la ou les couches (2) et de la ou les couches (3) comprend également majoritairement des motifs aliphatiques, à savoir plus de 50% de motifs aliphatiques.

Avantageusement, ledit polyamide de type aliphatique majoritaire de la ou les couches (2) et de la ou les couches (3) est constitué de plus de 75% de motifs aliphatiques, de préférence ledit polyamide de type aliphatique majoritaire de la ou les couches (2) et de la ou les couches (3) est totalement aliphatique.

Avantageusement, la présente invention concerne une structure tubulaire multicouche (MLT) telle que définie ci-dessus, dans laquelle ladite couche extérieure (3) comprend de 0 à 15% de plastifiant par rapport au poids total de la composition de la couche (3), ou dans laquelle l'ensemble des couches extérieures comprennent en moyenne de 0 à 5% de plastifiant.

Il est possible d'avoir une proportion de plastifiant plus importante dans la ou les couches extérieures, c'est-à-dire la ou les couches situées au-dessus de la couche barrière sans pour autant augmenter significativement la proportion d'extractibles.

Dans le cas où plusieurs couches (3) sont présentes, il est possible qu'une des couches extérieures présente une proportion de plastifiant importante telle que à 15% en poids mais dans ce cas, la proportion de plastifiant est compensée par l'épaisseur de la couche qui est alors beaucoup plus fine de manière à ce que la valeur moyenne de plastifiant présente dans l'ensemble des couches intérieures ne dépasse pas 5%. La proportion de plastifiant dans cette couche peut alors être jusqu'à 15% mais son épaisseur ne dépasse pas 20% de l'épaisseur totale du tube, de préférence elle ne dépasse pas $200\mu$m.

La présente invention concerne une structure tubulaire multicouche (MLT) comprenant une couche (3) telle que définie ci-dessus, dans laquelle au moins une deuxième couche extérieure (3') située au-dessus de la couche barrière est présente, et de préférence située au-dessus de la couche (3), ladite couche (3') étant plastifiée, ledit plastifiant étant présent en une proportion de 1,5% à 15% en poids par rapport au poids total de la composition de ladite couche, l'épaisseur de ladite couche (3') représente de préférence jusqu'à 20% de l'épaisseur totale de la structure tubulaire, en particulier jusqu'à $200\mu$m.

La couche (3') comprend tout comme la couche (3) majoritairement un polyamide type aliphatique c'est-à-dire que ledit polyamide de type aliphatique est présent en proportion de plus de 50% en poids dans la couche (3'). Le polyamide de type aliphatique est linéaire et n'est pas de type cycloaliphatique.

Avantageusement, ledit polyamide de type aliphatique majoritaire de la ou les couches (3') comprend également majoritairement des motifs aliphatiques, à savoir plus de 50% de motifs aliphatiques.

Avantageusement, ledit polyamide de type aliphatique majoritaire de la ou les couches (3') est constitué de plus de 75% de motifs aliphatiques, de préférence ledit polyamide de type aliphatique majoritaire de la ou les couches (3') est totalement aliphatique.

Dans un autre mode de réalisation, la présente invention concerne une structure tubulaire multicouche (MLT), dans laquelle la (ou les) couche(s) (3) comprend(comprennent) jusqu'à 1,5% en poids de plastifiant, par rapport au poids total de la composition de ladite couche ou de l'ensemble des compositions des couches (3).

Avantageusement, la structure tubulaire multicouche (MLT) comprend une seule couche (3) et est dépourvue de plastifiant.

Avantageusement, la structure tubulaire multicouche (MLT) comprend une seule couche (3) et une seule couche (2), les couches (2) et (3) étant dépourvues de plastifiant.

Dans un autre mode de réalisation, la présente invention concerne une structure tubulaire multicouche (MLT), dans laquelle le taux de plastifiant de toutes les couches situées au-dessus de la couche barrière est au maximum de 5% en poids par rapport au poids total des compositions de toutes les couches situées au-dessus de la couche barrière.

Dans un autre mode de réalisation, la présente invention concerne une structure tubulaire multicouche (MLT), dans laquelle la couche (3') est la plus extérieure et est la seule plastifiée, la (ou les) couche(s) (3) étant dépourvue(s) de plastifiant.

La proportion de plastifiant peut représenter jusqu'à 15% en poids du poids total de la composition de la couche (3'). Plus la proportion de plastifiant est importante et plus la couche (3') sera fine avec une épaisseur de ladite couche (3') qui représente de préférence jusqu'à 20% de l'épaisseur totale de la structure tubulaire, en particulier jusqu'à $200\mu$m.

Quel que soit le nombre de couches, trois, quatre, cinq ou plus, les structures tubulaires préférées sont celles contenant le moins possibles de plastifiant, et de préférence le moins de plastifiant dans les couches les plus internes, c'est-à-dire les plus proches du fluide. Ces structures peuvent être les suivantes :

- Structure tubulaire multicouche (MLT) ne contenant pas plus de 1,5% de plastifiant, dans les premiers 50% de son épaisseur à partir de la face interne en contact avec le fluide.
- Structure tubulaire multicouche (MLT) ne contenant pas plus de 1,5% de plastifiant, dans les premiers 75% de son épaisseur à partir de la face interne en contact avec le fluide.
- Structure tubulaire multicouche (MLT) ne contenant pas plus de 1,5% de plastifiant, dans les premiers 85% de son épaisseur à partir de la face interne en contact avec le fluide.
- Structure tubulaire multicouche (MLT) dépourvue de plastifiant, dans les premiers 50% de son épaisseur à partir de la face interne en contact avec le fluide.
- Structure tubulaire multicouche (MLT) dépourvue de plastifiant, dans les premiers 75% de son épaisseur à partir de la face interne en contact avec le fluide.

- Structure tubulaire multicouche (MLT) dépourvue de plastifiant, dans les premiers 85% de son épaisseur à partir de la face interne en contact avec le fluide.

La présente invention concerne une structure tubulaire multicouche (MLT) telle que définie ci-dessus, dans laquelle au moins une couche (4) est présente, ladite couche (4) ne contenant pas plus de 15% en poids de plastifiant, de préférence pas plus de 1,5% en poids de plastifiant, par rapport au poids total des constituants de la couche (4), avantageusement la couche (4) est dépourvue de plastifiant, ladite couche (4) comprenant majoritairement au moins un polyamide de type aliphatique ou constitué de plus de 75% de motifs aliphatiques, ledit polyamide aliphatique étant choisi parmi :

- un polyamide noté A présentant un nombre moyen d'atomes de carbone par atome d'azote noté CA compris de 4 à 8,5, avantageusement de 4 à 7 ;
- un polyamide noté B et un nombre moyen d'atomes de carbone par atome d'azote noté CB compris de 7 à 10, avantageusement de 7,5 à 9,5 ;
- un polyamide noté C présentant un nombre moyen d'atomes de carbone par atome d'azote noté CC compris de 9 à 18, avantageusement de 10 à 18 ;

sous réserve que lorsque ladite couche (4) comprend au moins trois polyamides, l'un au moins desdits polyamides A, B ou C est exclu,

ladite couche (4) étant située entre la couche barrière (1) et la couche intérieure (2) et/ou entre la couche extérieure (3) et la couche barrière (1) ;
ou ladite couche (4) est une couche de liant dont l'épaisseur représente jusqu'à 15% de la structure (MLT).

La couche (4) lorsqu'elle n'est pas une couche de liant est un polyamide de type aliphatique tel que défini pour les couches (2), (3) et (3').

Avantageusement, la structure tubulaire de l'invention est une structure à quatre couches constituée de l'extérieur vers l'intérieur les couches suivantes : (3)//(4)//(1)//(2), la couche (3) étant plastifiée jusqu'à 15% comme ci-dessus et fine et la couche (4) lorsqu'elle est différente de la couche de liant telle que définie ci-dessus est dépourvue de plastifiant ainsi que la couche (2).

Avantageusement, la structure tubulaire de l'invention est une structure à quatre couches constituée de l'extérieur vers l'intérieur les couches suivantes : (3)//(1)//(4)//(2), la couche (3) étant plastifiée jusqu'à 15% en poids comme ci-dessus et de préférence fine et la couche (4) lorsqu'elle est différente de la couche de liant, telle que définie ci-dessus, est dépourvue de plastifiant ainsi que la couche (2).

Néanmoins, cette couche (3) plastifiée jusqu'à 15% en poids ne doit pas être trop fine sinon la couche barrière est trop peu au centre et la structure MLT risque de ne pas être assez bon en choc. Par contre elle peut être très fine s'il y a une couche supplémentaire épaisse (non plastifiée) entre la couche (3) et la couche (1), de façon à ce que la couche (1) soit pas trop décentrée.

Une autre couche (2') et/ou une couche (3') peuvent également être présentes dans ces deux types de structures à quatre couches.

La ladite couche (4) peut également être un liant tel que décrit, en particulier dans les brevets EP 1452307 et EP1162061, EP 1216826 et EP0428833.

Il est implicite que les couches (3) et (1) ou (1) et (2) adhèrent entre elles. La couche de liant est destinée à être intercalée entre deux couches qui n'adhèrent pas ou difficilement entre elles.

Le liant peut être par exemple, mais sans être limité à ceux-ci, une composition à base de 50% de copolyamide 6/12 (de ratio 70/30 en masse) de Mn 16000, et de 50% copolyamide 6/12 (de ratio 30/70 en masse) de Mn 16000, une composition à base de PP (polypropylène) greffé avec de l'anhydride maléique, connu sous le nom d'Admer QF551A de la société Mitsui, une composition à base de PA610 (de Mn 30000, et tel que défini par ailleurs) et de 36% de PA6 (de Mn 28000) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba), une composition à base de PA612 (de Mn 29000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba), une composition à base de PA610 (de Mn 30000, et tel que défini par ailleurs) et de 36% de PA12 (de Mn 35000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba), une composition à base de 40% PA6 (de Mn 28000, et tel que défini par ailleurs), de 40% de PA12 (de Mn 35000, et tel que défini par ailleurs) et de 20% d'EPR fonctionnalisé Exxelor VA1801 (société Exxon) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba) ou encore une composition à base de 40% PA6.10 (de Mn 30000, et tel que défini par ailleurs), de 40% de PA6 (de Mn 28000, et tel que défini par ailleurs) et de 20% de modifiant choc type éthylène/acrylate d'éthyle/anhydride en rapport massique 68,5/30/1,5 (MFI 6 à 190°C sous 2.16 kg), et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Dans un autre mode de réalisation, la présente invention concerne une structure tubulaire multicouche (MLT) telle que définie ci-dessus, dans laquelle une couche (4') est présente, ladite couche (4') comprenant majoritairement au moins un polyamide de type aliphatique ou constitué de plus de 75% de motifs aliphatiques, ledit polyamide aliphatique étant choisi parmi :

- un polyamide noté A présentant un nombre moyen d'atomes de carbone par atome d'azote noté CA compris de 4 à 8,5, avantageusement de 4 à 7 ;
- un polyamide noté B et un nombre moyen d'atomes de carbone par atome d'azote noté CB compris de 7 à 10, avantageusement de 7,5 à 9,5 ;
- un polyamide noté C présentant un nombre moyen d'atomes de carbone par atome d'azote noté CC compris de 9 à 18, avantageusement de 10 à 18 ;

sous réserve que lorsque ladite couche (4') comprend au moins trois polyamides, l'un au moins desdits polyamides A, B ou C est exclu,

ou ladite couche (4') est une couche de liant dont l'épaisseur représente jusqu'à 15% de la structure (MLT), ledit au moins polyamide de ladite couche (4') pouvant être identique ou différent dudit polyamide de la couche (4) ; ladite couche (4') étant située entre la couche extérieure (3) et la couche barrière (1) et ladite couche de liant (4) étant située entre la couche barrière (1) et la couche intérieure (2).

La couche (4') peut contenir ou non un plastifiant. Avantageusement, elle est dépourvue de plastifiant tout comme la couche (2) et la couche (4), la couche (3) étant plastifiée mais fine comme définie ci-dessus.

Dans un autre mode de réalisation, la présente invention concerne une structure tubulaire multicouche (MLT) telle que définie ci-dessus, dans laquelle le polyamide de la couche intérieure (2) ou le polyamide de la couche extérieure (3) est un polyamide totalement aliphatique, de préférence le polyamide de la couche intérieure (2) et le polyamide de la couche extérieure (3) sont des polyamides totalement aliphatiques.

Dans un autre mode de réalisation, la présente invention concerne une structure tubulaire multicouche (MLT) telle que définie ci-dessus, dans laquelle une deuxième couche barrière (5) est présente, ladite deuxième couche barrière (5) étant adjacente ou non à la première couche barrière (1) et située au-dessous de ladite couche barrière (1).

Il peut être intéressant en particulier pour les essences alcoolisée, et tout particulièrement pour celle contenant du méthanol) de mettre une deuxième couche barrière pour limiter encore plus la diffusion de l'essence dans l'atmosphère et/ou pour réduire le taux d'extractible.

Cette deuxième couche barrière est différente de la première couche barrière (1).

Dans un autre mode de réalisation, la présente invention concerne une structure tubulaire multicouche (MLT) telle que définie ci-dessus, dans laquelle la couche barrière (1) est une couche en EVOH.

Dans un autre mode de réalisation, la présente invention concerne une structure tubulaire multicouche (MLT) telle que définie ci-dessus, dans laquelle l'EVOH est un EVOH comprenant jusqu'à 27% d'éthylène.

Dans un autre mode de réalisation, la présente invention concerne une structure tubulaire multicouche (MLT) telle que définie ci-dessus, dans laquelle l'EVOH est un EVOH comprenant un modifiant choc.

Dans un autre mode de réalisation, la présente invention concerne une structure tubulaire multicouche (MLT) telle que définie ci-dessus, dans laquelle la couche barrière (1) est une couche en polyphtalamide (PPA).

Le terme PPA signifie une composition à base majoritairement d'un polyamide comprenant une majorité de motifs qui comportent au moins un monomère aromatique, en particulier polyphtalamide de type de type copolyamide 6.T/x (ou x désigne un ou plusieurs comonomoères) tels les Zytel HTN de la société Dupont, tels les Grivory HT de la société Ems, tels les Amodel de la société Solvay, tels les Genestar de la socité Kuraray, tel les compositions PPA à base de coPA6T/6I, coPA6T/66, coPA6T/6, de coPA6T/6I/66, de PPA9T, de coPPA9T/x, de PPA10T, de coPPA10T/x.

Dans un autre mode de réalisation, la présente invention concerne une structure tubulaire multicouche (MLT) telle que définie ci-dessus, dans laquelle la couche barrière (1) est une couche en EVOH et la deuxième couche barrière (5) est une couche en PPA ou polymère fluoré, en particulier de type ETFE, EFEP, CPT.

Avantageusement, la couche barrière (1) est une couche en EVOH et la deuxième couche barrière (5) est une couche en PPA.

Dans un autre mode de réalisation, la présente invention concerne une structure tubulaire multicouche (MLT) telle que définie ci-dessus, dans laquelle la couche barrière (1) est une couche en EVOH et la deuxième couche barrière (5) est une couche en PPA.

Dans un autre mode de réalisation, la présente invention concerne une structure tubulaire multicouche (MLT) telle que définie ci-dessus, dans laquelle la couche barrière (1) est une couche en EVOH et la deuxième couche barrière (5) est une couche en polymère fluoré, en particulier de type ETFE, EFEP, CPT.

Avantageusement, dans la structure tubulaire multicouche (MLT) telle que définie ci-dessus, le polyamide de la couche intérieure (2) est une composition à base d'un polyamide choisi parmi A, B ou C tels que définis ci-dessus, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés.

Avantageusement, dans la structure tubulaire multicouche (MLT) telle que définie ci-dessus, le polyamide de la couche extérieure (3) est un polyamide choisi parmi B ou C tels que définis ci-dessus, en particulier PA 11, PA12, PA610, PA612, PA1012, les copolyamides correspondants et les mélanges desdits polyamides ou copolyamides, les polyamides obtenus à partir d'un lactame étant avantageusement lavés.

Avantageusement, dans la structure tubulaire multicouche (MLT) telle que définie ci-dessus, le polyamide de la couche intérieure (2) est une composition à base d'un polyamide choisi parmi A, B ou C tels que définis ci-dessus, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés, et le polyamide de la couche extérieure (3) est un polyamide choisi parmi B ou C tels que définis ci-dessus, en particulier PA 11, PA12, PA610, PA612, PA1012, les copolyamides correspondants et les mélanges desdits polyamides ou copolyamides, les polyamides obtenus à partir d'un lactame étant avantageusement lavés.

Dans un autre mode de réalisation, la présente invention concerne une structure tubulaire multicouche (MLT) telle que définie ci-dessous, dans laquelle le polyamide de la couche intérieure (2) ou de l'une au moins des autres couches (2) est un polyamide conducteur.

Lorsque la structure tubulaire de l'invention comprend plusieurs couches (2), la couche conductrice est celle qui est le plus en interne, c'est-à-dire en contact avec le fluide.

Avantageusement, dans la structure tubulaire multicouche (MLT) telle que définie ci-dessus, le polyamide de la couche (4) et/ou (4') est un mélange d'un polyamide présentant un nombre moyen d'atomes de carbone par atome d'azote de 10 ou plus et un polyamide présentant un nombre moyen d'atomes de carbone par atome d'azote de 6 ou moins, par exemple PA12 et PA6 et une (co)polyoléfine fonctionnalisée anhydride.

Avantageusement, dans la structure tubulaire multicouche (MLT) telle que définie ci-dessus, le polyamide de la couche (4) et/ou (4') est choisi parmi les mélanges binaires : PA6 et PA12, PA6 et PA612, PA6 et PA610, PA12 et PA612, PA12 et PA610, PA1010 et PA612, PA1010 et PA610, PA1012 et PA612, PA1012 et PA610, et les mélanges ternaires : PA6, PA610 et PA12 ; PA6, PA612 et PA12 ; PA6, PA614 et PA12.

Dans un autre mode de réalisation, la présente invention concerne une structure tubulaire multicouche (MLT) telle que définie ci-dessus, dans laquelle au moins une des couches (2), (3), (3'), (4) et (4') comprend au moins un modifiant choc et/ou au moins un additif.

Il est bien évident que le modifiant choc ou l'additif n'est pas un plastifiant.

Avantageusement, les couches (2) et (3) comprennent au moins un modifiant choc et/ou au moins un additif.

Avantageusement, les couches (2), (3) et (3') comprennent au moins un modifiant choc et/ou au moins un additif.

Avantageusement, les couches (2), (3), (3') et (4) comprennent au moins un modifiant choc et/ou au moins un additif.

Avantageusement, les couches (2), (3), (3'), (4) et (4') comprennent au moins un modifiant choc et/ou au moins un additif.

Selon un autre mode de réalisation, la présente invention concerne une structure tubulaire multicouche (MLT) telle que définie ci-dessus, dans laquelle la structure comprend les couches dans l'ordre suivant :
(3')//(3)//(4')//(1)//(4)//(2) dans laquelle les couches (3) et (3') sont telles que définies ci-dessus, la couche (2) et (4) ne contenant pas plus de 1,5% en poids de plastifiant, par rapport au poids total de la composition de chaque couche, en particulier la couche (2) et/ou (4) est(sont) dépourvue(s) de plastifiant, la couche (4') comprenant du plastifiant, en particulier la couche (4') est dépourvue de plastifiant.

En particulier ladite couche (3') de la structure à six couches ci-dessus est plastifiée, ledit plastifiant étant en particulier présent en une proportion de 1,5% à 15% en poids par rapport au poids total de la composition de ladite couche, l'épaisseur de ladite couche (3') représente de préférence jusqu'à 20% de l'épaisseur totale de la structure tubulaire, en particulier jusqu'à 200 μm, en particulier la couche (3') est la plus extérieure et est la seule plastifiée, la (ou les) couche(s) (3) étant dépourvue(s) de plastifiant.

Selon un autre aspect, la présente invention concerne l'utilisation d'une structure tubulaire multicouche MLT, telle que définie ci-dessus, pour le transport de fluides, en particulier d'essence.

Selon encore un autre aspect, la présente invention concerne l'utilisation d'une structure tubulaire multicouche

## EP 3 517 294 B1

MLT telle que définie ci-dessus, pour satisfaire un test d'extractibles, ledit test consistant notamment à remplir ladite structure tubulaire multicouche MLT d'essence alcoolisée type FAM-B et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 6g/m2 de surface interne de tube.

Toutes les variantes décrites pour la structure tubulaire multicouche MLT s'appliquent ici pour l'utilisation de ladite structure tubulaire multicouche MLT pour satisfaire ledit test d'extractibles.

Une valeur d'extractible inférieure ou égale à environ 6g/m2 de surface interne de tube indique que la proportion d'extractibles est très faible et évitera ainsi de boucher les injecteurs.

## EXEMPLES

L'invention va maintenant être décrite plus en détail à l'aide des exemples suivants qui ne sont pas limitatifs.

Les structures suivantes ont été ont été préparées par extrusion :

Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :

- un ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
- un bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
- une succession de bacs de refroidissement dans lesquels de l'eau est maintenue vers 20°C, permettant de refroidir le tube le long de parcours de la tête au banc de tirage ;
- un mesureur de diamètre ;
- un banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière. Dans le cas des structures comportant 6 couches, une extrudeuse supplémentaire est connectée et un mandrin spiralé est ajouté à la tête existante, en vue de réaliser la couche interne, en contact avec le fluide.

Avant les essais, afin d'assurer les meilleures propriétés au tube et une bonne qualité d'extrusion, on vérifie que les matières extrudées aient un taux d'humidité résiduel avant extrusion inférieur à 0.08%. Dans le cas contraire, on procède à une étape supplémentaire de séchage de la matière avant les essais, généralement dans un sécheur sous vide, pendant 1 nuit à 80°C.

Les tubes, qui répondent aux caractéristiques décrites dans la présente demande de brevet, ont été prélevés, après stabilisation des paramètres d'extrusion, les dimensions du tubes visées n'évoluant plus dans le temps. Le diamètre est contrôlé par un mesureur de diamètre laser installé en bout de ligne. Généralement, la vitesse de ligne est typiquement de 20m/min. Elle varie généralement entre 5 et 100m/min.

La vitesse de vis des extrudeuses dépend de l'épaisseur de la couche et du diamètre de la vis comme cela est connu de l'homme de l'art.

De manière générale, les température des extrudeuses et des outillages (tête et raccord) doivent être réglées de sorte à être suffisamment supérieures à la température de fusion des compositions considérées, de façon à ce qu'elles demeurent à l'état fondu, évitant ainsi qu'elles se solidifient et bloquent la machine.

Les structures tubulaires ont été testées sur différents paramètres (Tableau I). La quantité d'extractibles a été déterminée, les propriétés barrières ont été évaluées ainsi que le choc et l'éclatement. Le tableau II indique les tests utilisés et la classification des résultats.

TABLEAU I

| Exemples et contre exemples | Extractibles | Barrière | Choc | Eclatement (1) |
|---|---|---|---|---|
| Contre exemple 1:<br>PA12-TL / liant / EVOH / liant / PA12-TL<br>400/50/150/50/350$\mu$m | >50 | Bien | Bien | Bien |

(suite)

| Exemples et contre exemples | Extractibles | Barrière | Choc | Eclatement (1) |
|---|---|---|---|---|
| Contre exemple 2:<br>PA12-TL / liant / EVOH / liant-Noplast /<br>PA12-TL 400/50/150/50/350$\mu$m | >50 | Bien | Bien | Bien |
| Contre exemple 3:<br>PA12-NoPlast / liant-NoPlast / EVOH / liant-NoPlast /<br>PA12-TL<br>400/50/150/50/350$\mu$m | >50 | Bien | Bien | Bien |
| Contre exemple 4:<br>PA12-NoPlast / liant-NoPlast / EVOH / liant-no-plast /<br>PA11-TL<br>400/50/150/50/350$\mu$m | >30 | Bien | Bien | Bien |
| Contre exemple 5:<br>PA12-NoPlast / liant-NoPlast / EVOH / liant-no-plast /<br>PA610-TL<br>400/50/150/50/350$\mu$m | >30 | Bien | Bien | Bien |
| Ex.1 : PA12-NoPlast / liant-NoPlast / EVOH / liant- NoPlast<br>/ PA610-NoPlast<br>400/50/150/50/350$\mu$m | **<5.5** | Bien | Bien | Bien |
| Ex.2 : PA12-NoPlast / liant-NoPlast / EVOH / liant- NoPlast<br>/ PA612-NoPlast<br>400/50/150/50/350$\mu$m | **<6** | Bien | Bien | Bien |
| Ex. 3 PA12-NoPlast / liant-NoPlast / EVOH / liant- NoPlast<br>/ coPA612-6T-NoPlast 400/50/150/50/350$\mu$m | **<6** | Bien | Bien | Bien |
| Ex. 4 PA12-NoPlast / liant-NoPlast / EVOH / PA6-NoPlast<br>400/50/150/400$\mu$m | **<6** | Bien | Bien | Bien |
| Ex. 5 PA12-NoPlast / liant-NoPlast / EVOH / PA610-<br>NoPlast<br>400/50/150/400$\mu$m | **<5.5** | Bien | Bien | Bien |
| Ex. 6 PA610-NoPlast / EVOH / PA610-NoPlast<br>450/150/400 $\mu$m | **<5.5** | Bien | limite | Très bien |
| Ex. 7 PA11-TL / PA610-NoPlast / EVOH / PA610-NoPlast<br>150/300/150/400$\mu$m | **<5.5** | Bien | Bien | Très bien |
| Ex. 8 PA11-TL / PA610-NoPlast / EVOH / PA610-NoPlast<br>/ PA11-NoPlast<br>150/300/150/250/150$\mu$m | **<5.5** | Bien | Très bien | Très bien |
| Ex. 9 PA12-NoPlast / liant-NoPlast / EVOH / liant-NoPlast<br>/ PA610-NoPlast<br>550/50/150/50/200$\mu$m | **<4.5** | Bien | limite | Bien |
| Ex. 10 PA12-NoPlast / liant-NoPlast / EVOH24 / liant-<br>NoPlast / PA610-NoPlast<br>400/50/150/50/350$\mu$m | **<5.5** | Très bien | bien | Bien |
| Ex. 11 PA12-NoPlast / liant-NoPlast / EVOHhi / liant-<br>NoPlast / PA610-NoPlast<br>(550/50/150/50/200$\mu$) | **<4.5** | Bien | Bien | Bien |
| Ex. 12 PA12-TL /liant/ EVOHhi / liant-NoPlast / PA610-<br>NoPlast<br>550/50/150/50/200$\mu$ | **<5.5** | Bien | Bien | Bien |
| Ex. 13 PA12-TL / liant2 / EVOHhi / liant2-NoPlast / PA610-<br>NoPlast | **<5.5** | Bien | Bien | Bien |

(suite)

| Exemples et contre exemples | Extractibles | Barrière | Choc | Eclatement (1) |
|---|---|---|---|---|
| 550/50/150/50/200μ | | | | |
| Ex. 14 PA12-TL / liant / EVOHhi / liant-NoPlast / PA612-NoPlast 550/50/150/50/200μ | **<6** | Bien | Bien | Bien |
| Ex. 15 PA12-TL/PPA10T/PA11-NoPlast 600/250/150μm | **<5** | limite | Bien | Bien |
| Ex. 16 PA12-TL / liant / EVOH / PA610-NoPlast / PPA10T 350/50/100/400/100μm | **<3** | Très bien | Bien | Très bien |
| Ex. 17 PA12-TL / liant / EVOH / PPA10T / PA610-NoPlast 350/50/100/100/400μm | **<5.5** | Très bien | Bien | Très bien |
| Ex. 18 PA12-TL / liant / EVOH / PA610-NoPlast / EFEPc 350/50/100/400/100μ | **<3** | Très bien | Bien | Très bien |
| Ex. 19 PA11-TL / PA610-NoPlast / EVOH / PA610-NoPlast /PA11cond-NoPlast 400/50/150/300/100 | **<5.5** | Bien | limite | Très bien |
| (1) Eclatement est l'éclatement après au moins 96h avec de la bio-essence FAM-B à l'intérieur, on cherche donc une valeur suffisamment haute pour tenir la pression. | | | | |

TABLEAU II

| Propriétés | Très bien (TB) | Bien (B) | Limite (AB) | Mauvais (Mv) |
|---|---|---|---|---|
| Barrière Bio-essence CE10 60°C g/m$^2$.24h, barrière d'épais 150μm | <0.2 | 0.2-1 | 1-3 | > 3 |
| Extractibles : ce test consistant en un tube rempli d'essence alcoolisée type FAM-B à 60°C, durant 96 heures, puis vidé et filtré dans un bécher qu'on laisse ensuite évaporer et dont on pèse le résidu, ce dernier devant être inférieur ou égal 6g/m2 (de surface interne de tube) | <4.5 g/m$^2$ de surface tube (surface interne int) | 4.5-5.5 g/m$^2$ de surface tube (surface interne int) | 5.5-6 g/m$^2$ de surface tube (surface interne int) | > 6 g/m$^2$ de surface tube (surface interne int) |
| Choc VW-40°C norme VW TL52435 2010 | <4% de casse | <11% de casse | <21% de casse | >22% de casse |
| Eclatement après vieillissement norme VW TL52435 2010 | >30 N/mm$^2$ (MPa) | 30-27 N/mm$^2$ (MPa) | 27-25 N/mm$^2$ (MPa) | <25 N/mm$^2$ (MPa) |

Les mesures de perméabilité aux essences (barrière Bio-essence) sont déterminées à 60°C selon une méthode gravimétrique avec le CE10 : isooctane/toluène/éthanol = 45/45/10 vol.%.

La perméabilité instantanée est nulle pendant la période d'induction, puis elle augmente progressivement jusqu'à une valeur à l'équilibre qui correspond à la valeur de perméabilité en régime permanent. Cette valeur obtenue en régime permanent est considérée comme étant la perméabilité du matériau.

**Compositions**

PA12-TL : désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 1.2% de stabilisants organiques (constitués de 0.8% de phénol Lowinox 44B25 de la société Great Lakes, de 0.2% de phosphite Irgafos 168 de la société Ciba, de 0.2% d'anti-UV Tinuvin 312 de la société Ciba). La température de fusion de cette composition est de 175°C.

PA12-NoPlast = PA12-TL sans le plastifiant (ce dernier est remplacé par le même % en PA12)

PA11-TL désigne une composition à base de polyamide 11 de Mn (masse moléculaire en nombre) 29000, contenant 5% de plastifiant BBSA (benzyl butyl sulfonamide), 6% de modifiant choc type éthylène/acrylate d'éthyle/anhydride en rapport massique 68,5/30/1,5 (MFI 6 à 190°C sous 2.16 kg), et de 1.2% de stabilisants organiques (constitués de 0.8% de phénol Lowinox 44B25 de la société Great Lakes, de 0.2% de phosphite Irgafos 168 de la société Ciba, de 0.2% d'anti-UV Tinuvin 312 de la société Ciba). La température de fusion de cette composition est de 185°C.

PA11-NoPlast = PA11-TL sans le plastifiant (ce dernier est remplacé par PA11)

PA610-TL = PA610 + 12% modifiant choc EPR1 + stabilisant organique + 10% plastifiant

PA610-NoPlast = PA610-TL sans le plastifiant (ce dernier est remplacé par PA610)

PA612-TL = PA612 + 12% modifiant choc EPR1 + stabilisant organique + 9%plastifiant

PA612-NoPlast = PA612-TL sans le plastifiant (ce dernier est remplacé par PA612)

PA6-TL = PA6 + 12% modifiant choc EPR1 + stabilisant organique + 12% plastifiant

PA6-NoPlast = PA6-TL sans le plastifiant (ce dernier est remplacé par PA6)

- PA12 : Polyamide 12 de Mn (masse moléculaire en nombre) 35000. La température de fusion est de 178°C, son enthalpie de fusion est 54kJ/m2

- PA11 : Polyamide 11 de Mn (masse moléculaire en nombre) 29000. La température de fusion est de 190°C, son enthalpie de fusion est 56kJ/m2

- PA610: Polyamide 6.10 de Mn (masse moléculaire en nombre) 30000. La température de fusion est de 223°C, son enthalpie de fusion est 61kJ/m2

- PA612 : Polyamide 6.12 de Mn (masse moléculaire en nombre) 29000. La température de fusion est de 218°C, son enthalpie de fusion est 67kJ/m2

- PA6 : Polyamide 6 de Mn (masse moléculaire en nombre) 28000. La température de fusion est de 220°C, son enthalpie de fusion est 68kJ/m2

- EPR1 : Désigne un EPR fonctionnalisé par un groupe réactif fonction anhydride (à 0.5-1% en masse), de MFI 9 (à 230°C, sous) 10kg, de type Exxellor VA1801 de la société Exxon.

Stabilisant organique = 1.2% de stabilisants organiques constitués de 0.8% de phénol (Lowinox 44B25 de la société Great Lakes), de 0.2% de phosphite (Irgafos 168 de la société Ciba, de 0.2% d'anti-UV (Tinuvin 312 de la société Ciba).

Plastifiant = BBSA (benzyl butyl sulfonamide)

coPA612-6T-NoPlast = coPA6.12/6.T avec 20% mol de 6.T (donc 80% mol de 6.12)

(ce coPA fait MFI 235°C, 5kg = ( T° fusion = 200°C) + 20% EPR1 + stab orga

PPA10T = coPA10.T/6.T de ratio molaire 60/40 T fusion 280°C + 18% EPR1 + stab orga

PA11cond-noplast = PA11 de Mn 15000 + 9%EPR1 + 22% de noir de carbone type Ensaco 200

Liant = Composition à base de 43.8% PA612 (t.q défini par ailleurs), de 25% de PA6 (t.q défini par ailleurs) et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba), et de 10% de plastifiant BBSA (benzyl butyl sulfonamide).

Liant-NoPlast = Composition à base de 48.8% PA612 (t.q défini par ailleurs), de 30% de PA6 (t.q défini par ailleurs), et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba).

Liant2 = Composition à base de 43.8% PA610 (t.q défini par ailleurs), de 25% de PA6 (t.q défini par ailleurs) et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba), et de 10% de plastifiant BBSA (benzyl butyl sulfonamide).

Liant2-NoPlast = Composition à base de 48.8% PA610 (t.q défini par ailleurs), de 30% de PA6 (t.q défini par ailleurs), et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba).

EVOH = EVOH à 32% d'éthylène, type EVAL FP101B (société Eval)
EVOH24 = EVOH à 24% d'éthylène, type EVAL M100B (société Eval)
EVOHhi = EVOH à 27% d'éthylène et modifié choc, type EVAL LA170B(société Eval)

PPA10T/6T = coPA10.T/6.T avec 40% mol de 6.T (de MFI 300°C, 5kg = 8, et de T°C de fusion 280°C) + 15% d'EPR1 + stab orga

EFEPc = EFEP fonctionnalisé et conducteur type Neoflon RP5000AS de Daikin

Liant PA610 + PA6. Désigne une composition à base de PA612 (de Mn 29000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Les structures présentant des couches dépourvues de plastifiant situées sous la barrière et notamment en contact avec le fluide présentent d'excellents résultats sur le test d'extractibles et bien meilleurs que les contre exemples dans lesquels la couche en contact avec le fluide est plastifiée.

**Revendications**

1. Structure tubulaire multicouche (MLT) destinée au transport de carburants, en particulier d'essence, notamment alcoolisée, comprenant de l'extérieur vers l'intérieur au moins une couche barrière (1) et au moins une couche intérieure (2) situé au-dessous de la couche barrière,

la couche barrière (1) étant une couche en EVOH ou en PPA
ladite couche intérieure (2) ou l'ensemble des couches (2) et des autres couches éventuelles situées au-dessous de la couche barrière, contenant en moyenne de 0 à 1,5% en poids de plastifiant par rapport respectivement au poids total de la composition de la couche (2) ou au poids total de l'ensemble des compositions des couches (2) et des autres couches éventuelles situées au-dessous de la couche barrière,
ladite couche intérieure (2) comprenant majoritairement au moins un polyamide de type aliphatique ou constitué de plus de 75% de motifs aliphatiques, ledit polyamide aliphatique étant choisi parmi :

- un polyamide noté A présentant un nombre moyen d'atomes de carbone par atome d'azote noté $C_A$ compris de 4 à 8,5, avantageusement de 4 à 7 ;
- un polyamide noté B et un nombre moyen d'atomes de carbone par atome d'azote noté $C_B$ compris de 7 à 10, avantageusement de 7,5 à 9,5 ;
- un polyamide noté C présentant un nombre moyen d'atomes de carbone par atome d'azote noté $C_C$ compris de 9 à 18, avantageusement de 10 à 18 ;

sous réserve que lorsque ladite couche intérieure (2) comprend au moins trois polyamides, l'un au moins desdits polyamides A, B ou C est exclu,

au moins une couche plus extérieure (3) située au-dessus de la couche barrière est présente, la dite couche extérieure (3) comprenant majoritairement au moins un polyamide de type aliphatique ou constitué de plus de 75% de motifs aliphatiques, en particulier ledit polyamide aliphatique présentant un nombre moyen d'atomes de carbone par atome d'azote compris de 9,5 à 18, avantageusement de 11 à 18,

au moins une deuxième couche extérieure (3') située au-dessus de la couche barrière est présente, ladite couche (3') étant située au-dessus de la couche (3), ladite couche (3') étant plastifiée, ledit plastifiant étant présent en une proportion de 1,5% à 15% en poids par rapport au poids total de la composition de ladite couche, l'épaisseur de ladite couche (3') représente de préférence jusqu'à 20% de l'épaisseur totale de la structure tubulaire, en particulier jusqu'à 200$\mu$m,

au moins une couche (4) est présente, ladite couche (4) ne contenant pas plus de 15% en poids de plastifiant, de préférence pas plus de 1,5% en poids de plastifiant, par rapport au poids total des constituants de la couche (4), avantageusement la couche (4) est dépourvue de plastifiant,

ladite couche (4) comprenant majoritairement au moins un polyamide de type aliphatique ou constitué de plus de 75% de motifs aliphatiques, ledit polyamide aliphatique étant choisi parmi :

- un polyamide noté A présentant un nombre moyen d'atomes de carbone par atome d'azote noté $C_A$ compris de 4 à 8,5, avantageusement de 4 à 7 ;
- un polyamide noté B et un nombre moyen d'atomes de carbone par atome d'azote noté $C_B$ compris de 7 à 10, avantageusement de 7,5 à 9,5 ;
- un polyamide noté C présentant un nombre moyen d'atomes de carbone par atome d'azote noté $C_C$ compris de 9 à 18, avantageusement de 10 à 18 ;

sous réserve que lorsque ladite couche (4) comprend au moins trois polyamides, l'un au moins desdits polyamides A, B ou C est exclu,

ladite couche (4) étant située entre la couche barrière (1) et la couche intérieure (2) et/ou entre la couche extérieure (3) et la couche barrière (1) ;

ou ladite couche (4) est une couche de liant dont l'épaisseur représente jusqu'à 15% de la structure (MLT).

2.  Structure tubulaire multicouche (MLT) selon la revendication 1, dans laquelle ladite couche intérieure (2) ou chacune des couches (2) et des autres couches éventuelles situées au-dessous de la couche barrière est(sont) dépourvue(s) de plastifiant.

3.  Structure tubulaire multicouche (MLT) selon la revendication 1 ou 2, dans laquelle ladite couche extérieure (3) comprend de 0 à 15% de plastifiant par rapport au poids total de la composition de la couche (3), ou dans laquelle l'ensemble des couches extérieures comprennent en moyenne de 0 à 5% de plastifiant.

4.  Structure tubulaire multicouche (MLT) selon l'une des revendications 1 à 3, dans laquelle la couche (3') est la plus extérieure et est la seule plastifiée, la (ou les) couche(s) (3) étant dépourvue(s) de plastifiant.

5.  Structure tubulaire multicouche (MLT) selon l'une des revendications 1 à 4, dans laquelle le polyamide de la couche intérieure (2) ou le polyamide de la couche extérieure (3) est un polyamide totalement aliphatique, de préférence le polyamide de la couche intérieure (2) et le polyamide de la couche extérieure (3) sont des polyamides totalement aliphatiques.

6.  Structure tubulaire multicouche (MLT) selon l'une des revendications 1 à 5, dans laquelle le polyamide de la couche intérieure (2) est une composition à base d'un polyamide choisi parmi A, B ou C, tels que définis dans la revendication 1, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés.

7. Structure tubulaire multicouche (MLT) selon l'une des revendications 1 à 6, dans laquelle le polyamide de la couche extérieure (3) est un polyamide choisi parmi B ou C tels que définis dans la revendication 1, en particulier PA 11, PA12, PA610, PA612, PA1012, les copolyamides correspondants et les mélanges desdits polyamides ou copolyamides, les polyamides obtenus à partir d'un lactame étant avantageusement lavés.

8. Structure tubulaire multicouche (MLT) selon l'une des revendications 1 à 7, dans laquelle le polyamide de la couche intérieure (2) est une composition à base d'un polyamide choisi parmi A, B ou C tels que définis dans la revendication 1, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés, et le polyamide de la couche extérieure (3) est un polyamide choisi parmi B ou C tels que définis dans la revendication 1, en particulier PA 11, PA12, PA610, PA612, PA1012, les copolyamides correspondants et les mélanges desdits polyamides ou copolyamides, les polyamides obtenus à partir d'un lactame étant avantageusement lavés.

9. Structure tubulaire multicouche (MLT) selon l'une des revendications 1 à 8, dans laquelle le polyamide de la couche intérieure (2) ou de l'une au moins des autres couches (2) est un polyamide conducteur.

10. Structure tubulaire multicouche (MLT) selon l'une des revendications 5 à 9, dans laquelle le polyamide de la couche (4) est choisi parmi les mélanges binaires : PA6 et PA12, PA6 et PA612, PA6 et PA610, PA12 et PA612, PA12 et PA610, PA1010 et PA612, PA1010 et PA610, PA1012 et PA612, PA1012 et PA610, et les mélanges ternaires : PA6, PA610 et PA12 ; PA6, PA612 et PA12 ; PA6, PA614 et PA12.

11. Structure tubulaire multicouche (MLT) selon l'une des revendications 1 à 10, dans laquelle au moins une des couches (2), (3), (4) comprend au moins un modifiant choc et/ou au moins un additif.

12. Utilisation d'une structure tubulaire multicouche MLT, telle que définie dans l'une des revendications 1 à 11, pour le transport de carburants, en particulier d'essence.

13. Utilisation d'une structure tubulaire multicouche MLT, telle que définie dans l'une des revendications 1 à 11, pour satisfaire un test d'extractibles, ledit test consistant notamment à remplir ladite structure tubulaire multicouche MLT d'essence alcoolisée type FAM-B et à chauffer l'ensemble à 60°C pendant 96 heures, puis à le vider en le filtrant dans un bécher, puis à laisser le filtrat du bécher s'évaporer à température ambiante pour enfin peser ce résidu dont la proportion doit être inférieure ou égale à environ 6g/m2 de surface interne de tube.

**Patentansprüche**

1. Mehrschichtige Rohrstruktur (MLT), bestimmt für den Transport von Kraftstoffen, insbesondere von Benzin, besonders alkoholhaltigem, die von außen nach innen mindestens eine Sperrschicht (1) und mindestens eine innere Schicht (2) umfasst, die unterhalb der Sperrschicht angeordnet ist,

wobei die Sperrschicht (1) eine Schicht aus EVOH oder PPA ist,
wobei die innere Schicht (2) oder die Gesamtheit der Schichten (2) und der anderen optionalen Schichten, die unterhalb der Sperrschicht angeordnet sind, bezogen jeweils auf das Gesamtgewicht der Zusammensetzung der Schicht (2) oder auf das Gesamtgewicht der Gesamtheit der Zusammensetzungen der Schichten (2) und der anderen optionalen Schichten, die unterhalb der Sperrschicht angeordnet sind, durchschnittlich von 0 bis 1,5 Gew.-% Weichmacher enthalten,
wobei die innere Schicht (2) überwiegend mindestens ein Polyamid vom aliphatischen Typ umfasst oder zu mehr als 75 % aus aliphatischen Einheiten aufgebaut ist, wobei das aliphatische Polyamid ausgewählt ist aus:

- einem Polyamid mit der Bezeichnung A, das eine durchschnittliche Anzahl von Kohlenstoffatomen pro Stickstoffatom mit der Bezeichnung CA im Bereich von 4 bis 8,5, vorteilhafterweise von 4 bis 7 aufweist;
- einem Polyamid mit der Bezeichnung B und einer durchschnittlichen Anzahl von Kohlenstoffatomen pro Stickstoffatom mit der Bezeichnung CB im Bereich von 7 bis 10, vorteilhafterweise von 7,5 bis 9,5;
- einem Polyamid mit der Bezeichnung C, das eine durchschnittliche Anzahl von Kohlenstoffatomen pro Stickstoffatom mit der Bezeichnung Ce im Bereich von 9 bis 18, vorteilhafterweise von 10 bis 18 aufweist;

unter der Voraussetzung, dass, wenn die innere Schicht (2) mindestens drei Polyamide umfasst, mindestens eines der Polyamide A, B oder C ausgeschlossen ist,

wobei mindestens eine äußerste Schicht (3), die oberhalb der Sperrschicht angeordnet ist, vorhanden ist, wobei die äußere Schicht (3) überwiegend mindestens ein Polyamid vom aliphatischen Typ umfasst oder aus mehr als 75 % aliphatischen Einheiten aufgebaut ist, wobei insbesondere das aliphatische Polyamid eine durchschnittliche Anzahl von Kohlenstoffatomen pro Stickstoffatom im Bereich von 9,5 bis 18, vorteilhafterweise von 11 bis 18 aufweist,

wobei mindestens eine zweite äußere Schicht (3'), die über der Sperrschicht angeordnet ist, vorhanden ist, wobei die Schicht (3') über der Schicht (3) angeordnet ist, wobei die Schicht (3') weichgemacht wurde, wobei der Weichmacher bezogen auf das Gesamtgewicht der Zusammensetzung der Schicht in einem Anteil von 1,5 Gew.-% bis 15 Gew.-% vorhanden ist, wobei die Dicke der Schicht (3') vorzugsweise bis zu 20 % der Gesamtdicke der Rohrstruktur ausmacht, insbesondere bis zu 200 $\mu$m,

wobei mindestens eine Schicht (4) vorhanden ist, wobei die Schicht (4) bezogen auf das Gesamtgewicht der Bestandteile der Schicht (4) nicht mehr als 15 Gew.-% Weichmacher, vorzugsweise nicht mehr als 1,5 Gew.-% Weichmacher, enthält, wobei die Schicht (4) vorteilhafterweise frei von Weichmacher ist,

wobei die Schicht (4) überwiegend mindestens ein Polyamid vom aliphatischen Typ umfasst oder aus mehr als 75 % aus aliphatischen Einheiten aufgebaut ist, wobei das aliphatische Polyamid ausgewählt ist aus:

- einem Polyamid mit der Bezeichnung A, das eine durchschnittliche Anzahl von Kohlenstoffatomen pro Stickstoffatom mit der Bezeichnung $C_A$ im Bereich von 4 bis 8,5, vorteilhafterweise von 4 bis 7 aufweist;
- einem Polyamid mit der Bezeichnung B und einer durchschnittlichen Anzahl von Kohlenstoffatomen pro Stickstoffatom mit der Bezeichnung $C_B$ im Bereich von 7 bis 10, vorteilhafterweise von 7,5 bis 9,5;
- einem Polyamid mit der Bezeichnung C, das eine durchschnittliche Anzahl von Kohlenstoffatomen pro Stickstoffatom mit der Bezeichnung Cc im Bereich von 9 bis 18, vorteilhafterweise von 10 bis 18 aufweist;

unter der Voraussetzung, dass, wenn die Schicht (4) mindestens drei Polyamide umfasst, mindestens eines der Polyamide A, B oder C ausgeschlossen ist,

wobei die Schicht (4) zwischen der Sperrschicht (1) und der inneren Schicht (2) und/oder zwischen der äußeren Schicht (3) und der Sperrschicht (1) angeordnet ist;

oder wobei die Schicht (4) eine Bindemittelschicht ist, deren Dicke bis zu 15 % der Struktur (MLT) ausmacht.

2. Mehrschichtige Rohrstruktur (MLT) nach Anspruch 1, wobei die innere Schicht (2) oder jede der Schichten (2) und der anderen optionalen Schichten, die unterhalb der Sperrschicht angeordnet ist (sind), frei von Weichmacher ist (sind).

3. Mehrschichtige Rohrstruktur (MLT) nach Anspruch 1 oder 2, wobei die äußere Schicht (3) bezogen auf das Gesamtgewicht der Zusammensetzung der Schicht (3) von 0 bis 15 % Weichmacher umfasst, oder wobei die Gesamtheit der äußeren Schichten durchschnittlich von 0 bis 5 % Weichmacher umfassen.

4. Mehrschichtige Rohrstruktur (MLT) nach einem der Ansprüche 1 bis 3, wobei die Schicht (3') die äußerste ist und die einzige weichgemachte ist, wobei die Schicht oder die Schichten (3) frei von Weichmacher ist (sind).

5. Mehrschichtige Rohrstruktur (MLT) nach einem der Ansprüche 1 bis 4, wobei das Polyamid der inneren Schicht (2) oder das Polyamid der äußeren Schicht (3) ein vollständig aliphatisches Polyamid ist, wobei das Polyamid der inneren Schicht (2) und das Polyamid der äußeren Schicht (3) vorzugsweise vollständig aliphatische Polyamide sind.

6. Mehrschichtige Rohrstruktur (MLT) nach einem der Ansprüche 1 bis 5, wobei das Polyamid der inneren Schicht (2) ein eine Zusammensetzung auf Basis eines Polyamids ist, ausgewählt aus A, B, oder C wie in Anspruch 1 definiert, insbesondere PA6, PA66, PA6/66, PA11, PA610, PA612, PA1012, den entsprechenden Copolyamiden und den Mischungen der Polyamide oder Copolyamide, wobei die ausgehend von einem Lactam erhaltenen Polyamide vorteilhafterweise gewaschen werden.

7. Mehrschichtige Rohrstruktur (MLT) nach einem der Ansprüche 1 bis 6, wobei das Polyamid der äußeren Schicht (3) ein Polyamid ist, ausgewählt aus B oder C, wie in Anspruch 1 definiert, insbesondere PA 11, PA12, PA610, PA612, PA1012, den entsprechenden Copolyamiden und den Mischungen der Polyamide oder Copolyamide, wobei die ausgehend von einem Lactam erhaltenen Polyamide vorteilhafterweise gewaschen werden.

8. Mehrschichtige Rohrstruktur (MLT) nach einem der Ansprüche 1 bis 7, wobei das Polyamid der inneren Schicht (2) eine Zusammensetzung auf Basis eines Polyamids ist, ausgewählt aus A, B, oder C wie in Anspruch 1 definiert, insbesondere PA6, PA66, PA6/66, PA11, PA610, PA612, PA1012, den entsprechenden Copolyamiden und den Mischungen der Polyamide oder Copolyamide, wobei die ausgehend von einem Lactam erhaltenen Polyamide vorteilhafterweise gewaschen werden, und das Polyamid der äußeren Schicht (3) ein Polyamid ist, ausgewählt aus B oder C wie in Anspruch 1 definiert, insbesondere PA 11, PA12, PA610, PA612, PA1012, den entsprechenden Copolyamiden und den Mischungen der Polyamide oder Copolyamide, wobei die ausgehend von einem Lactam erhaltenen Polyamide vorteilhafterweise gewaschen werden.

9. Mehrschichtige Rohrstruktur (MLT) nach einem der Ansprüche 1 bis 8, wobei das Polyamid der inneren Schicht (2) oder mindestens einer der anderen Schichten (2) ein leitfähiges Polyamid ist.

10. Mehrschichtige Rohrstruktur (MLT) nach einem der Ansprüche 5 bis 9, wobei das Polyamid der Schicht (4) ausgewählt ist aus den binären Mischungen: PA6 und PA12, PA6 und PA612, PA6 und PA610, PA12 und PA612, PA12 und PA610, PA1010 und PA612, PA1010 und PA610, PA1012 und PA612, PA1012 und PA610 und den ternären Mischungen: PA6, PA610 und PA12; PA6, PA612 und PA12; PA6, PA614 und PA12.

11. Mehrschichtige Rohrstruktur (MLT) nach einem der Ansprüche 1 bis 10, wobei mindestens eine der Schichten (2), (3), (4) mindestens einen Schlagzähmodifizierer und/oder mindestens ein Additiv umfasst.

12. Anwendung einer mehrschichtigen Rohrstruktur MLT wie in einem der Ansprüche 1 bis 11 definiert, für den Transport von Kraftstoffen, insbesondere von Benzin.

13. Anwendung einer mehrschichtigen Rohrstruktur MLT wie in einem der Ansprüche 1 bis 11 definiert, um einer Prüfung auf extrahierbare Stoffe zu genügen, wobei die Prüfung besonders darin besteht, die mehrschichtige Rohrstruktur MLT mit alkoholhaltigem Benzin vom Typ FAM-B zu füllen und die Gesamtheit während 96 Stunden auf 60 °C zu erwärmen, es anschließend durch Filtrieren in ein Becherglas zu entleeren, anschließend das Filtrat bei Umgebungstemperatur aus dem Becherglas verdampfen zu lassen, um diesen Rest schließlich zu wiegen, dessen Anteil kleiner als oder gleich etwa 6 g/m2 der Innenoberfläche des Rohrs sein muss.

## Claims

1. A multilayer tubular structure (MLT) for transporting fuels, in particular gasoline, especially alcohol-based gasoline, comprising, from the outside to the inside, at least one barrier layer (1) and at least one inner layer (2) located underneath the barrier layer,

> the barrier layer (1) being an EVOH or PPA layer.
> said inner layer (2) or all of the layers (2) and any other layers located underneath the barrier layer, containing on average from 0 to 1.5% by weight of plasticizer relative respectively to the total weight of the composition of the layer (2) or to the total weight of all of the compositions of the layers (2) and of any other layers located underneath the barrier layer,
> said outer layer (2) predominantly comprising at least one aliphatic polyamide or a polyamide consisting of more than 75% of aliphatic units, said aliphatic polyamide being selected from:
>
> > - a polyamide denoted A having an average number of carbon atoms per nitrogen atom denoted $C_A$ comprised from 4 to 8.5, advantageously from 4 to 7;
> > - a polyamide denoted B and an average number of carbon atoms per nitrogen atom denoted $C_B$ comprised from 7 to 10, advantageously from 7.5 to 9.5,
> > - a polyamide denoted C having an average number of carbon atoms per nitrogen atom denoted Cc comprised from 9 to 18, advantageously from 10 to 18;
>
> with the proviso that, when said inner layer (2) comprises at least three polyamides, at least one of said polyamides A, B or C is excluded,
> at least one layer further outward (3), located above the barrier layer is present, said outer layer (3) predominantly comprising at least one aliphatic polyamide or a polyamide consisting of more than 75% of aliphatic units, in particular said aliphatic polyamide having an average number of carbon atoms per nitrogen atom of from 9.5 to 18, advantageously from 11 to 18,
> at least one second outer layer (3') located above the barrier layer is present, said layer (3') being located above the layer (3), said layer (3') being plasticized, said plasticizer being present in a proportion of 1.5% to 15% by weight relative to the total weight of the composition of said layer, the thickness of said layer (3') preferably represents up to 20% of the total thickness of the tubular structure, in particular up to 200 $\mu$m.

at least one layer (4) is present, said layer (4) containing not more than 15% by weight of plasticizer, preferably not more than 1.5% by weight of plasticizer, relative to the total weight of the components of layer (4), advantageously layer (4) is free of plasticizer,

said layer (4) predominantly comprising at least one aliphatic polyamide or a polyamide consisting of more than 75% of aliphatic units, said aliphatic polyamide being selected from:

- a polyamide denoted A having an average number of carbon atoms per nitrogen atom denoted $C_A$ comprised from 4 to 8.5, advantageously from 4 to 7;
- a polyamide denoted B and an average number of carbon atoms per nitrogen atom denoted $C_B$ comprised from 7 to 10, advantageously from 7.5 to 9.5,
- a polyamide denoted C having an average number of carbon atoms per nitrogen atom denoted Cc comprised from 9 to 18, advantageously from 10 to 18;

with the proviso that, when said layer (4) comprises at least three polyamides, at least one of said polyamides A, B or C is excluded,

said layer (4) being located between the barrier layer (1) and the inner layer (2) and/or between the outer layer (3) and the barrier layer (1);

or said layer (4) is a binder layer, the thickness of which is up to 15% of the structure (MLT).

2. The multilayer tubular structure (MLT) according to claim 1, wherein said inner layer (2) or each of the layers (2) and any other layers located underneath the barrier layer is (are) free of plasticizer.

3. The multilayer tubular structure (MLT) according to claim 1 or 2, wherein said outer layer (3) comprises from 0 to 15% of plasticizer relative to the total weight of the composition of layer (3), or wherein all the outer layers comprise on average from 0 to 5% of plasticizer.

4. The multilayer tubular structure (MLT) according to one of claims 1 to 3, wherein the layer (3') is the outermost layer and is the only plasticized layer, the layer(s) (3) being free of plasticizer.

5. The multilayer tubular structure (MLT) according to one of claims 1 to 4, wherein the polyamide of the inner layer (2) or the polyamide of the outer layer (3) is a fully aliphatic polyamide; preferably the polyamide of the inner layer (2) and the polyamide of the outer layer (3) are fully aliphatic polyamides.

6. The multilayer tubular structure (MLT) according to one of claims 1 to 5, wherein the polyamide of the inner layer (2) is a composition based on a polyamide selected from A, B or C, as defined in claim 1, in particular PA6, PA66, PA6/66, PA11, PA610, PA612, PA1012, the corresponding copolyamides and the mixtures of said polyamides or copolyamides, the polyamides obtained from a lactam advantageously being washed.

7. The multilayer tubular structure (MLT) according to one of claims 1 to 6, wherein the polyamide of the outer layer (3) is a polyamide selected from B or C as defined in claim 1, in particular PA 11, PA12, PA610, PA612, PA1012, the corresponding copolyamides and the mixtures of said polyamides or copolyamides, the polyamides obtained from a lactam advantageously being washed.

8. The multilayer tubular structure (MLT) according to one of claims 1 to 7, wherein the polyamide of the inner layer (2) is a composition based on a polyamide selected from A, B or C as defined in claim 1, in particular PA6, PA66, PA6/66, PA11, PA610, PA612, PA1012, the corresponding copolyamides and the mixtures of said polyamides or copolyamides, the polyamides obtained from a lactam advantageously being washed, and the polyamide of the outer layer (3) is a polyamide selected from B or C as defined in claim 1, in particular PA11, PA12, PA610, PA612, PA1012, the corresponding copolyamides and the mixtures of said polyamides or copolyamides, the polyamides obtained from a lactam being advantageously washed.

9. The multilayer tubular structure (MLT) according to one of claims 1 to 8, wherein the polyamide of the inner layer (2) or of at least one of the other layers (2) is a conductive polyamide.

10. The multilayer tubular structure (MLT) according to one of claims 5 to 9, wherein the polyamide of layer (4) is selected from the binary mixtures: PA6 and PA12, PA6 and PA612, PA6 and PA610, PA12 and PA612, PA12 and PA610, PA1010 and PA612, PA1010 and PA610, PA1012 and PA612, PA1012 and PA610, and the ternary mixtures: PA6, PA610 and PA12; PA6, PA612 and PA12; PA6, PA614 and PA12.

11. The multilayer tubular structure (MLT) according to one of claims 1 to 10, wherein at least one of the layers (2), (3), (4) comprises at least one impact modifier and/or at least one additive.

12. The use of a multilayer tubular structure (MLT), as defined in one of claims 1 to 11, for transporting fuels, in particular gasoline.

13. The use of a multilayer tubular structure (MLT), as defined in one of claims 1 to 11, in order to satisfy an extractable test, said test particularly consisting of filling said multilayer tubular structure (MLT) with FAM-B alcohol-based gasoline and heating the assembly at 60°C for 96 hours, then emptying it by filtering it into a beaker, then allowing the filtrate from the beaker to evaporate at ambient temperature and finally weighing this residue, the proportion of which must be less than or equal to approximately 6 g/m$^2$ of internal tube surface.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2098580 A
- EP 1452307 A
- EP 1162061 A
- EP 1216826 A
- EP 0428833 A